# EUROPEAN PATENT APPLICATION

(11) **EP 4 539 562 A1**
(43) Date of publication of application: **16.04.2025**
(21) Application number: 22946113.2
(22) Date of filing: 13.06.2022
(51) Int. Cl.: H04W 56/00

(54) **RANDOM ACCESS METHOD AND APPARATUS, DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2022/098465
(87) International publication number: WO 2023/240413

(57) **Abstract**

The present application relates to the field of mobile communications, and discloses a random access method and apparatus, a device, and a storage medium. The method comprises: according to a time difference between a first time and a second time, determining a resource for sending a first message, wherein the first time is determined according to system information (SI) received by a terminal, the second time is determined according to epoch time of auxiliary uplink synchronization information received by the terminal, and the first message is used for initiating random access. According to the present application, terminals of the same base station can be found by means of searching at different times, and random access is prevented from being initiated at the same random access occasion, thereby preventing an access conflict between the terminals and reducing the probability of access failure caused by the access conflict.

## Description

### TECHNICAL FIELD

This application relates to the field of mobile communications, and in particular to a method, an apparatus, a device and a storage medium for random access.

### BACKGROUND

A terminal may initiate random access by sending Message 1 (Msg 1) or Message A (Msg A) to a base station. The terminal may send the above message to the base station at a random access occasion (RACH occasion) of a random access channel (RACH).

Before the terminal initiates random access, uplink synchronization needs to be achieved at the terminal. In the Non-Terrestrial Network (NTN) system, the base station broadcasts the System Information Block (SIB) to configure uplink synchronization auxiliary information for the terminal to achieve uplink synchronization. The SIB is also configured with an effective timepoint (also referred to as epoch time) of the uplink synchronization auxiliary information. Accordingly, the terminal will select the first RACH occasion after the effective timepoint of the uplink synchronization auxiliary information to initiate random access.

For terminals that search the same base station at different times, the same effective timepoint may be configured. Correspondingly, it may happen that terminals that search the same base station at different times initiate random access at the same time (the same RACH occasion), thereby causing access conflicts.

### SUMMARY

Embodiments of this application provide a method, an apparatus, a device and a storage medium for random access. The technical solutions are as follows.

According to an aspect of this application, there is provided a random access method, which is executed by a terminal and includes:
determining, based on a time difference between a first timepoint and a second timepoint, a resource for sending a first message,
where the first timepoint is determined based on system information (SI) received by the terminal, the second timepoint is determined based on an effective timepoint of uplink synchronization auxiliary information received by the terminal, and the first message is used for initiating random access.

According to another aspect of this application, there is provided a random access apparatus, which includes:
a determining module, configured to determine, based on a time difference between a first timepoint and a second timepoint, a resource for sending a first message;
where the first timepoint is determined based on SI received by the terminal, the second timepoint is determined based on an effective timepoint of uplink synchronization auxiliary information received by the terminal, and the first message is used to initiating random access.

According to another aspect of this application, there is provided a terminal, which includes: a processor; a transceiver connected to the processor; and a memory for storing executable instructions of the processor; where the processor is configured to load and execute the executable instructions to implement the random access method as described in the above aspects.

According to another aspect of this application, there is provided a computer-readable storage medium, in which executable instructions are stored, and the executable instructions are loaded and executed by a processor to implement the random access method as described in the above aspects.

According to another aspect of this application, there is provided a chip, which includes a programmable logic circuit and/or a program instruction. When the chip is run on a computer device, it is configured to implement the random access method as described in the above aspects.

According to another aspect of this application, a computer program product or computer program is provided. The computer program product or computer program includes computer instructions. The computer instructions are stored in a computer-readable storage medium. A processor reads the computer instructions from the computer-readable storage medium and executes the computer instructions, thereby causing the computer device to implement the random access method as described in the above aspects.

The technical solution according to this application at least includes the following beneficial effects.

The terminal determines the transmission resource of the message for initiating random access based on the time difference between the first timepoint and the second timepoint, where the first timepoint is determined based on system information received by the terminal, and the second timepoint is determined based on an effective timepoint of uplink synchronization auxiliary information received by the terminal. Accordingly, the terminals that search the same base station at different times can be prevented from initiating random access at the same random access occasion, thereby avoiding access conflicts of terminals and reducing the probability of access failure caused by access conflicts.

### BRIEF DESCRIPTION OF THE DRAWINGS

In order to more clearly illustrate the technical solutions in the embodiments of this application, the drawings needed to be used in the description of the embodiments will be briefly introduced below. The drawings in the following description are only some embodiments of this application. For those of ordinary skill in the art, other drawings can also be obtained based on these drawings without exerting creative efforts.
FIG. 1 is a schematic diagram of an NTN scenario based on transparent payload according to some embodiments of this application.
FIG. 2 is a schematic diagram of an NTN scenario based on regenerative payload according to some embodiments of this application.
FIG. 3 is a schematic diagram of RACH occasion according to some embodiments of this application.
FIG. 4 is a flow chart of a random access method according to some embodiments of this application.
FIG. 5 is a flow chart of a random access method according to some embodiments of this application.
FIG. 6 is a schematic diagram of synchronization signal blocks and random access occasions according to some embodiments of this application.
FIG. 7 is a schematic diagram of synchronization signal blocks and random access occasions according to some embodiments of this application.
FIG. 8 is a structural block diagram of a random access apparatus according to some embodiments of this application.
FIG. 9 is a schematic structural diagram of a communication device according to some embodiments of this application.

### DETAILED DESCRIPTION

In order to make the purpose, technical solutions and advantages of this application clearer, the embodiments of this application will be further described in detail below with reference to the accompanying drawings.

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with this application. Rather, they are merely examples of apparatus and methods consistent with aspects of the application as detailed in the appended claims.

The terminology used in this disclosure is for the purpose of describing particular embodiments only and is not intended to limit the disclosure. As used in this disclosure and the appended claims, the singular forms "a/an," "the" and "said" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in this disclosure to describe various information, the information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "while" or "in response to determining."

### Introduction to the NTN system

Currently, the third Generation Partnership Project (3GPP) is studying NTN technology. Compared with the traditional terrestrial network (TN) system, the NTN system uses satellites and high altitude platform stations (HAPS) to participate in the network deployment. Taking satellite communications as an example, theoretically only a few satellites are needed to cover the entire globe except the polar regions of the earth. Compared with the TN system, the NTN system has significant coverage advantages. Typical application scenarios of NTN systems include situations where base stations cannot be built or are damaged, such as continuous coverage in remote mountainous areas, deserts, oceans, and forests, or emergency communications when disasters occur or base stations are damaged. Typical scenarios of NTN systems can be summarized as: all-terrain coverage, signaling offload, emergency communications, Internet of Things (IOT) and broadcast services.

NTN systems may include satellite systems. According to satellite altitude, that is, satellite orbit height, satellite systems can be divided into highly elliptical orbit (HEO) satellites, geostationary earth orbit (GEO) satellites, medium-earth orbit (MEO) satellites and low-earth orbit (LEO) satellites. In addition, the NTN system can also include aerial network devices such as HAPS communication system. The network devices involved in this application are not limited to the above examples.

LEO satellites can be called non-stationary satellites, and there are many types of non-stationary satellites. Taking LEO satellites as an example, LEO satellites move faster than the ground, about 7Km/s, so the coverage area provided by LEO satellites will also move with the LEO satellites. The signal propagation distance of LEO satellites is short, the link loss is small, and the transmission power requirements of user terminals are not high.

GEO satellites can also be called geostationary satellites. The GEO satellites move at the same speed as the earth's rotation system, so the GEO satellites remain stationary relative to the ground. Correspondingly, the cells of GEO satellites are also stationary. GEO satellite cells have a large coverage area, with a general cell diameter of around 500km.

In order to ensure the coverage of communication satellites and improve the system capacity of the entire satellite communication system, communication satellites use multiple beams to cover the ground. One communication satellite can form dozens or even hundreds of beams to cover the ground, and one satellite beam can cover a ground area with a diameter of dozens to hundred kilometers.

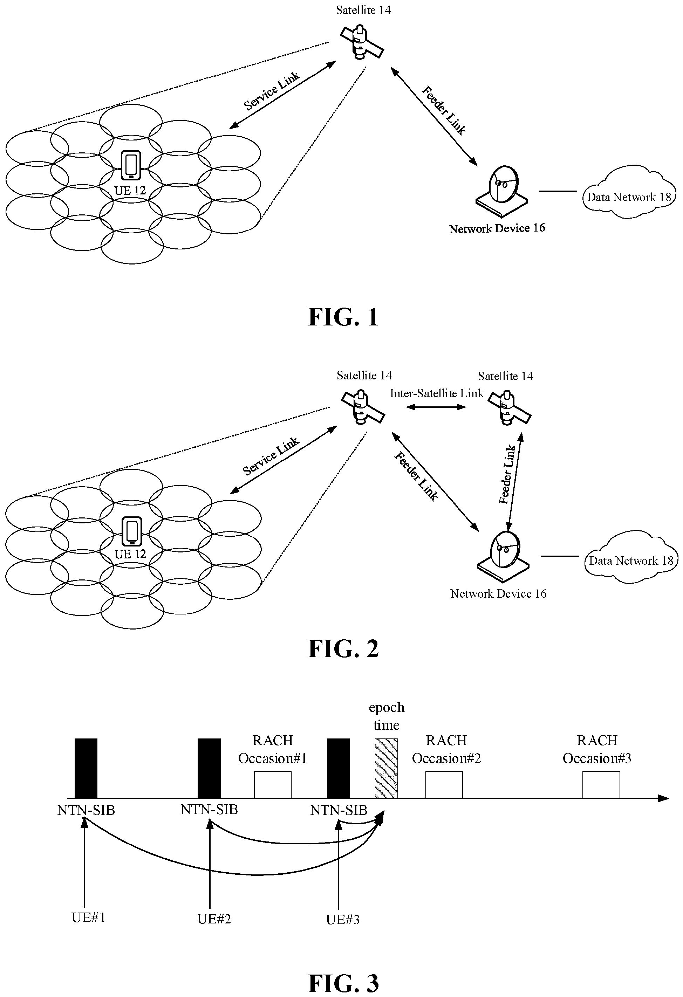

Currently, there are two types of satellites considered by 3GPP, namely: satellites with transparent payload and satellites with regenerative payload. FIG. 1 shows a schematic diagram of an NTN scenario based on transparent payload, and FIG. 2 shows a schematic diagram of an NTN scenario based on regenerative payload.

The NTN network may consist of the following network elements:
- one or more network devices 16, configured to connect the satellite 14 and the data network 18 on the ground;
- feeder link, which is a link used for communication between network device 16 and satellite 14;
- service link, which is a link used for communication between the user terminal 12 and the satellite 14;
- satellite 14, which, based on the functions it provides, can be divided into two types: transparent payload and regenerative payload;
- transparent payload, only providing functions of wireless frequency filtering, frequency conversion and amplification, and only providing transparent forwarding of signals without changing the signal waveform forwarded by it;
- regenerative payload, providing, in addition to the functions of wireless frequency filtering, frequency conversion and amplification, functions of demodulation/decoding, routing/conversion, encoding/modulation, and having some or all functions of the base station;
- inter-satellite links (ISL), existing in the NTN scenario of regenerative payload.

It should be noted that the terminal in some embodiments of this application may refer to UE (User Equipment), access terminal, user unit, user station, mobile station, mobile site, remote station, remote terminal, mobile device, wireless communication device, user agent, or user device. Optionally, the terminal can also be a cellular phone, a cordless phone, a SIP (Session Initiation Protocol) phone, a WLL (Wireless Local Loop) station, a PDA (Personal Digital Assistant), a handheld device with wireless communication functions, a computing device or other processing devices connected to wireless modems, a vehicle-mounted device, a wearable device, a terminal in 5GS (5th Generation System) or future evolved PLMN (Public Land Mobile Network), or the like. Embodiments of this application are not limited thereto.

The access network device in some embodiments of this application is a device deployed in the access network to provide wireless communication functions for terminals. The access network device may include various forms of macro base stations, micro base stations, relay stations, access points, or the like. In systems using different wireless access technologies, the names of devices with access network device functions may be different. For example, in 5G NR systems, they are called gNodeB or gNB. As communication technology evolves, the name "access network device" may change. For convenience of description, in the embodiments of this application, the above-mentioned devices that provide wireless communication functions for terminals are collectively referred to as access network device. Optionally, a communication relationship can be established between the terminal and the core network device through the access network device. For example, in the long term evolution (LTE) system, the access network device may be EUTRAN (Evolved Universal Terrestrial Radio Access Network) or one or more eNodeBs in EUTRAN; in the 5G NR system, the access network device can be RAN or one or more gNBs in the RAN.

The functions of core network device are mainly to provide user connections, manage users, and carry services. As a bearer network, it provides an interface to external networks. For example, the core network devices in the 5G NR system may include AMF (Access and Mobility Management Function) entities, UPF (User Plane Function) entities, SMF (Session Management Function) entities, LMF (Location Management Function) entities, and the like. The access network device and core network device can be collectively referred to as network devices.

### Introduction to random access of terminals

Random access of terminals can be divided into two types, including 4-step random access and 2-step random access. The terminal initiates 4-step random access by sending Msg 1 to the base station. The terminal initiates 2-step random access by sending Msg A to the base station. In 4-step random access, after sending Msg 1, the terminal will receive Msg 2 fed back by the base station. Then the terminal will send Msg 3 to the base station and receive Msg 4 fed back by the base station, thereby completing random access. In 2-step random access, after sending Msg A, the terminal will receive Msg B fed back by the base station, thereby completing random access. Herein, Msg A can be regarded as sending the upstream Msg 1 and Msg 3 in a package, and Msg B can be regarded as sending the downstream Msg 2 and Msg 4 in a package.

The terminal will select an RACH occasion to use among multiple RACH occasions, and send Msg 1 or Msg A to the base station in the selected RACH occasion, thereby initiating random access.

Before the terminal initiates random access, uplink synchronization is to be ensured at the terminal. In the NTN system, the base station broadcasts SIB to the terminal, so as to configure uplink synchronization auxiliary information for the terminal to achieve uplink synchronization. The uplink synchronization auxiliary information includes at least one of satellite ephemeris and common timing advance (TA) parameter information. The SIB is also configured with the effective timepoint (also referred to as epoch time) of the uplink synchronization auxiliary information. In other words, the satellite ephemeris and common TA parameter information have a certain epoch time, and the epoch time may be a timepoint in the future.

When the uplink synchronization auxiliary information is configured with epoch time, the terminal will select the first RACH occasion after the epoch time of the uplink synchronization auxiliary information to initiate random access. In the above case, for multiple terminals that search for the same cell at different times and receive cell broadcast messages (configured with the same epoch time), when random access is to be initiated, it may cause the multiple terminals to initiate random access at the same time, resulting in access conflicts.

For example, FIG. 3 is a schematic diagram of a random access occasion according to some embodiments of this application. As shown in FIG. 3, the coordinate axis represents time. UE #1, UE #2 and UE #3 receive an SIB (NTN-SIB) broadcast by the cell at different timepoints. The SIB is configured with the same epoch time of the uplink synchronization auxiliary information. Since the uplink synchronization auxiliary information has not yet taken effect, UE #1, UE #2 and UE #3 are to wait until the random access occasion (random access occasion #2) after the epoch time before initiating random access. In this case, UE #1, UE #2, and UE #3 will initiate random access at the same time at random access occasion #2, resulting in an access conflict.

Based on the above example, it can be seen that for terminals that search the same base station at different timepoints, there may be situations where the same epoch time of the uplink synchronization auxiliary information is configured. Correspondingly, it may happen that terminals that search the same base station at different timepoints initiate random access at the same time (the same random access occasion), thus causing access conflicts.

Based on the method according to some embodiments of this application, the terminal determines the transmission resources of the message used to initiate random access based on the time difference between a first timepoint and a second timepoint, where the first timepoint is determined based on the system information received by the terminal, and the second timepoint is determined based on the epoch time of the uplink synchronization auxiliary information received by the terminal. Accordingly, the terminals that search the same base station at different timepoints can be prevented from initiating random access at the same random access occasion, thereby avoiding access conflicts of terminals and reducing the probability of access failure caused by access conflicts.

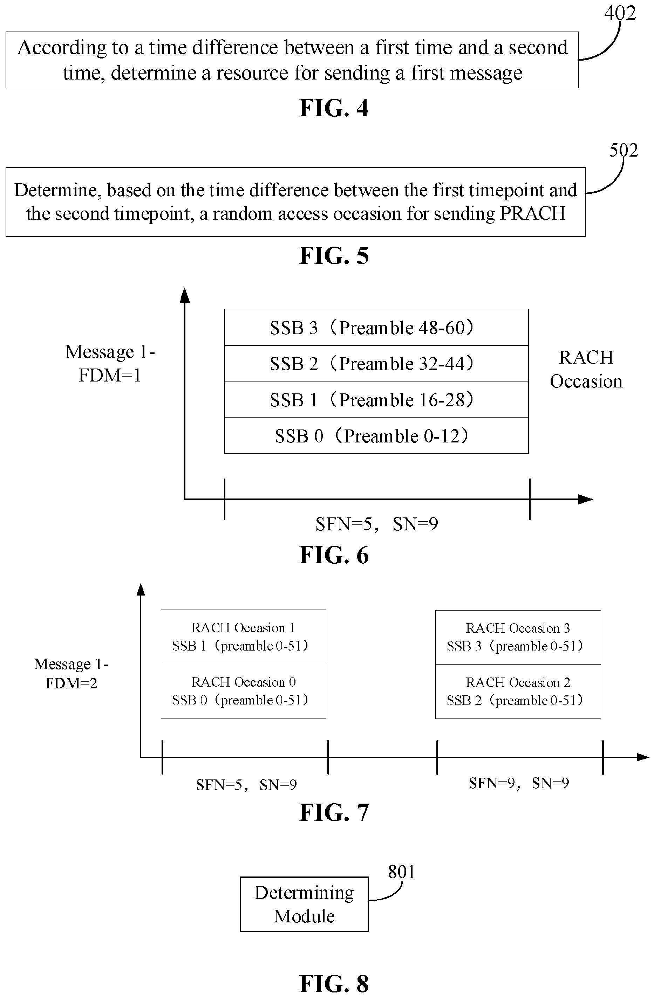

FIG. 4 shows a flow chart of a random access method according to some embodiments of this application. This method can be applied in the terminal and includes a following step.

In step 402, a resource for sending a first message is determined based on a time difference between a first timepoint and a second timepoint.

The first message is used for the terminal to initiate random access. In other words, the terminal initiates random access by sending the first message to the network device. The resource used to send the first message includes at least one of a time domain resource and a frequency domain resource used by the terminal for sending the first message.

Optionally, the first message includes at least one of the following:
- Msg 1;
- Msg A.

Herein, Msg 1 is used by the terminal to initiate 4-step random access; Msg A is used by the terminal to initiate 2-step random access.

The first timepoint is determined by the terminal based on system information (SI) received by the terminal. For example, the first timepoint is determined by the terminal based on a timepoint when the terminal receives the SI. The second timepoint is determined by the terminal based on an epoch time of uplink synchronization auxiliary information received by the terminal. Optionally, the SI includes the uplink synchronization auxiliary information. The time difference is positively related to a duration between the timepoint when the terminal receives the SI and the timepoint when the uplink synchronization auxiliary information takes effect.

Optionally, the first timepoint includes at least one of the following:
- a starting timepoint or an ending timepoint of a time slot at which the terminal receives a system information block (SIB);
- a starting timepoint or an ending timepoint corresponding to a system frame number (SFN) or a subframe number (SN) where the SIB received by the terminal is located;
- a starting timepoint or an ending timepoint of a system information time window (SI window) where the SIB received by the terminal is located.

In some embodiments of this disclosure, the SIB includes the uplink synchronization auxiliary information.

Optionally, when the first timepoint includes multiple timepoints, that is, there are multiple first timepoints, the terminal determines the time difference between each first timepoint and the second timepoint, thereby obtaining multiple time differences. The terminal then determines the average or weighted average of the multiple time differences as the time difference between the first timepoint and the second timepoint. Alternatively, the terminal determines the earliest first timepoint in the time domain, and determines the time difference between this first timepoint and the second timepoint as the time difference between the first timepoint and the second timepoint. Alternatively, the terminal determines the latest first timepoint in the time domain, and determines the time difference between this first timepoint and the second timepoint as the time difference between the first timepoint and the second timepoint. Alternatively, the terminal randomly selects a first timepoint from a plurality of first timepoint, and determines the time difference between the selected first timepoint and the second timepoint as the time difference between the first timepoint and the second timepoint. Alternatively, the terminal receives an instruction from the network device, and determines the time difference between the second timepoint and a first timepoint indicated by the network device among the plurality of first timepoints as the time difference between the first timepoint and the second timepoint.

Optionally, the above-mentioned second timepoint is the epoch time of the uplink synchronization auxiliary information.

The network device can explicitly indicate the epoch time of the uplink synchronization auxiliary information through the SIB, or implicitly indicate the epoch time of the uplink synchronization auxiliary information.

### Introduction to the situation where SIB explicitly indicates the epoch time

In the case where the SIB explicitly indicates the epoch time of the uplink synchronization auxiliary information, the SIB includes the uplink synchronization auxiliary information and the epoch time of the uplink synchronization auxiliary information. Accordingly, the epoch time of the uplink synchronization auxiliary information determined by the terminal is indicated by the SIB.

### Introduction to the situation where SIB implicitly indicates the epoch time

In the case where the SIB implicitly indicates the epoch time of the uplink synchronization auxiliary information, the SIB includes the uplink synchronization auxiliary information, but does not include the epoch time of the uplink synchronization auxiliary information. Accordingly, the terminal will determine the epoch time of the uplink synchronization auxiliary information based on the timepoint when the SIB is received. For example, the terminal determines that the epoch time of the uplink synchronization auxiliary information is the ending time of an SI window in which the SIB is located.

Optionally, the above SIB includes at least one of the following:
- SIB19;
- NTN-SIB.

The above uplink synchronization auxiliary information is information used to realize uplink synchronization of the terminal. Optionally, the above-mentioned uplink synchronization auxiliary information includes at least one of the following:
- satellite ephemeris information;
- common TA parameter information.

Optionally, when referring to that the terminal determines the resource for sending the first message based on the time difference between the first timepoint and the second timepoint, it means that the terminal determines a random access occasion (also referred to as RACH occasion) used for sending the physical random access channel (PRACH) based on the time difference. In the time domain, there are usually multiple RACH occasions, and the terminal selects an RACH occasion it uses to initiate random access. Optionally, the larger the time difference is, the earlier the RACH occasion selected by the terminal is in the time domain. The smaller the time difference is, the later the RACH occasion selected by the terminal is in the time domain.

Optionally, the method according to some embodiments of this application provides the following two manners of determining the RACH occasion based on the time difference.

### Introduction to the first manner of determining RACH occasion based on time difference

The terminal determines the RACH occasion to send PRACH based on the time difference between the first timepoint and the second timepoint and n preset time differences:
- when the time difference is not greater than the *m-th* preset time difference and greater than the *(m-1)-th* preset time difference, the terminal determines to use the *((n-m)+1)-th* available RACH occasion;
- when the time difference is not greater than the *1^{st}* preset time difference, the terminal determines to use the *n-th* available RACH occasion.

Herein, the available RACH occasions include RACH occasions that are located after the epoch time of the uplink synchronization auxiliary information in the time domain. The *n-th* RACH occasion is before the *(n-1)-th* RACH occasion, and the *(m-1)-th* preset time difference is smaller than the *m-th* preset time difference, where *m* is less than or equal to *n, m* and *n* are positive integers, and *n* is greater than or equal to 2.

The maximum time difference between the first timepoint and the second timepoint is usually known. For example, the maximum difference between the first timepoint and the second timepoint is 1024 system frames, that is, the time difference is 10.24s. Optionally, when the time difference is greater than the *n-th* preset time difference, the terminal will use the *1^{st}* available RACH occasion.

Optionally, the division of the above *n* time differences is predefined, or the value of *n* is broadcast to the terminal by the network device. Optionally, when the value of *n* is broadcast to the terminal by the network device, the difference between the *(m-1)-th* preset time difference and the *m-th* preset time difference is predefined. In this case, the terminal may only need to know the value of *n* to calculate the RACH occasion to be used. Optionally, when the value of *n* is broadcast to the terminal by the network device, the maximum difference between the first timepoint and the second timepoint is predefined. In this case, the terminal may only need to know the value of *n,* and the difference between the *(m-1)-th* and *m-th* preset time differences can be calculated, and the RACH occasion to be used can be calculated.

For example, the terminal determines the RACH occasion to send the PRACH based on the time difference between the first timepoint and the second timepoint and two preset time differences. The first preset time difference is 5s, and the second preset time difference is 10s. When the time difference between the first timepoint and the second timepoint is not greater than 5 seconds, the terminal uses the second available RACH occasion. When the time difference between the first timepoint and the second timepoint is greater than 5s and not greater than 10s, the terminal uses the first available RACH occasion. If the time difference between the first timepoint and the second timepoint is greater than 10 seconds, the terminal also uses the first available RACH occasion.

### Introduction to the second manner of determining RACH occasion based on time difference

The terminal determines the RACH occasion to send PRACH based on a valid time of the uplink synchronization auxiliary information and a difference between the valid time and the time difference between the first timepoint and the second timepoint:
- when the difference is not greater than *y*/*x* of the valid time and greater than *(y-1)*/*x* of the valid time, the terminal determines to use the *((x-y)+1)-th* available RACH occasion;
- when the difference is not greater than *1*/*x* of the valid time, the terminal determines to use the *x-th* available RACH occasion.

The valid time of the uplink synchronization auxiliary information refers to the duration for which the uplink synchronization auxiliary information is valid, and the starting point of this duration is the epoch time of the uplink synchronization auxiliary information. Optionally, the valid time of the uplink synchronization auxiliary information is also configured in the SIB. Available RACH occasions include RACH occasions that are located after the epoch time of the uplink synchronization auxiliary information in the time domain. The *x-th* RACH occasion is before the *(x-1)-th* RACH occasion, where *x* is a preset value, and the value of *x* can be broadcast to the terminal by the network device; *y* is less than or equal to *x, y* and *x* are positive integers, and *x* is greater than or equal to 2.

The difference between the valid time and the time difference between the first timepoint and the second timepoint is usually not greater than the valid time. Optionally, when the difference between the valid time and the time difference between the first timepoint and the second timepoint is greater than the valid time, the terminal will use the first available RACH occasion.

For example, the value of *x* is 2, and the length of the valid time is *P.* When the difference between the time difference and the valid time is not greater than *P* and greater than *P*/*2,* the terminal determines to use the first available RACH occasion. When the difference between the time difference and the valid time is not greater than *P*/*2,* the terminal determines to use the second available RACH occasion.

Optionally, when the terminal is configured with a selected beam (i.e., beam forming), the terminal will use beam-based RACH occasions, and the terminal will consider the influence of beams when selecting an RACH occasion. Accordingly, the terminal will select the RACH occasion to send the PRACH according to the time difference from the RACH occasions corresponding to the selected beam. In other words, among the RACH occasions corresponding to the selected beam, the RACH occasion to send the PRACH is selected based on the above method. Accordingly, the terminal only initiates random access at an RACH occasion corresponding to the selected beam.

To sum up, based on the method according to some embodiments of this application, the terminal determines the transmission resources of the message used to initiate random access based on the time difference between a first timepoint and a second timepoint, where the first timepoint is determined based on the system information received by the terminal, and the second timepoint is determined based on the epoch time of the uplink synchronization auxiliary information received by the terminal. Accordingly, the terminals that search the same base station at different timepoints can be prevented from initiating random access at the same RACH occasion, thereby avoiding access conflicts of terminals and reducing the probability of access failure caused by access conflicts.

FIG. 5 shows a flow chart of a random access method according to some embodiments of this application. This method can be applied in the terminal and includes a following step.

In step 502, an RACH occasion to send PRACH is determined based on the time difference between the first timepoint and the second timepoint.

The first timepoint is determined by the terminal based on the SI received by the terminal, and the second timepoint is determined by the terminal based on the epoch time of the uplink synchronization auxiliary information received by the terminal. Optionally, the SI includes the uplink synchronization auxiliary information.

Optionally, the first timepoint includes at least one of the following:
- a starting timepoint or an ending timepoint of a time slot at which the terminal receives an SIB;
- a starting timepoint or an ending timepoint corresponding to an SFN or an SN where the SIB received by the terminal is located;
- a starting timepoint or an ending timepoint of an SI window where the SIB received by the terminal is located.

In some embodiments of this disclosure, the SIB includes the uplink synchronization auxiliary information.

Optionally, when the first timepoint includes multiple timepoints, that is, there are multiple first timepoints, the terminal determines the time difference between each first timepoint and the second timepoint, thereby obtaining multiple time differences. The terminal then determines the average or weighted average of the multiple time differences as the time difference between the first timepoint and the second timepoint. Alternatively, the terminal determines the earliest first timepoint in the time domain, and determines the time difference between this first timepoint and the second timepoint as the time difference between the first timepoint and the second timepoint. Alternatively, the terminal determines the latest first timepoint in the time domain, and determines the time difference between this first timepoint and the second timepoint as the time difference between the first timepoint and the second timepoint. Alternatively, the terminal randomly selects a first timepoint from a plurality of first timepoint, and determines the time difference between the selected first timepoint and the second timepoint as the time difference between the first timepoint and the second timepoint. Alternatively, the terminal receives an instruction from the network device, and determines the time difference between the second timepoint and a first timepoint indicated by the network device among the plurality of first timepoints as the time difference between the first timepoint and the second timepoint.

Optionally, the above-mentioned second timepoint is the epoch time of the uplink synchronization auxiliary information.

The network device can explicitly indicate the epoch time of the uplink synchronization auxiliary information through the SIB, or implicitly indicate the epoch time of the uplink synchronization auxiliary information.

### Introduction to the situation where SIB explicitly indicates the epoch time

In the case where the SIB explicitly indicates the epoch time of the uplink synchronization auxiliary information, the SIB includes the uplink synchronization auxiliary information and the epoch time of the uplink synchronization auxiliary information. Accordingly, the epoch time of the uplink synchronization auxiliary information determined by the terminal is indicated by the SIB.

### Introduction to the situation where SIB implicitly indicates the epoch time

In the case where the SIB implicitly indicates the epoch time of the uplink synchronization auxiliary information, the SIB includes the uplink synchronization auxiliary information, but does not include the epoch time of the uplink synchronization auxiliary information. Accordingly, the terminal will determine the epoch time of the uplink synchronization auxiliary information based on the timepoint when the SIB is received. For example, the terminal determines that the epoch time of the uplink synchronization auxiliary information is the ending time of an SI window in which the SIB is located.

Optionally, the above SIB includes at least one of the following:
- SIB19;
- NTN-SIB.

The above uplink synchronization auxiliary information is information used to realize uplink synchronization of the terminal. Optionally, the above-mentioned uplink synchronization auxiliary information includes at least one of the following:
- satellite ephemeris information;
- common TA parameter information.

In the time domain, there are usually multiple RACH occasions, and the terminal can select an RACH occasion it uses to initiate random access based on the forgoing time difference. Optionally, the larger the time difference is, the earlier the RACH occasion selected by the terminal is in the time domain. The smaller the time difference is, the later the RACH occasion selected by the terminal is in the time domain.

Optionally, the method according to some embodiments of this application provides the following two manners of determining the RACH occasion based on the time difference.

### Introduction to the first manner of determining RACH occasion based on time difference

The terminal determines the RACH occasion to send PRACH based on the time difference between the first timepoint and the second timepoint and *n* preset time differences:
- when the time difference is not greater than the *m-th* preset time difference and greater than the *(m-1)-th* preset time difference, the terminal determines to use the *((n-m)+1)-th* available RACH occasion;
- when the time difference is not greater than the *1^{st}* preset time difference, the terminal determines to use the *n-th* available RACH occasion.

Herein, the available RACH occasions include RACH occasions that are located after the epoch time of the uplink synchronization auxiliary information in the time domain. The *n-th* RACH occasion is before the *(n-1)-th* RACH occasion, and the *(m-1)-th* preset time difference is smaller than the *m-th* preset time difference, where *m* is less than or equal to *n, m* and *n* are positive integers, and *n* is greater than or equal to 2.

The maximum time difference between the first timepoint and the second timepoint is usually known. For example, the maximum difference between the first timepoint and the second timepoint is 1024 system frames, that is, the time difference is 10.24s. Optionally, when the time difference is greater than the *n-th* preset time difference, the terminal will use the *1^{st}* available RACH occasion.

Optionally, the division of the above *n* time differences is predefined, or the value of *n* is broadcast to the terminal by the network device. Optionally, when the value of *n* is broadcast to the terminal by the network device, the difference between the *(m-1)-th* preset time difference and the *m-th* preset time difference is predefined. In this case, the terminal may only need to know the value of *n* to calculate the RACH occasion to be used.

### Introduction to the second manner of determining RACH occasion based on time difference

The terminal determines the RACH occasion to send PRACH based on a valid time of the uplink synchronization auxiliary information and a difference between the valid time and the time difference between the first timepoint and the second timepoint:
- when the difference is not greater than *y*/*x* of the valid time and greater than *(y-1)*/*x* of the valid time, the terminal determines to use the *((x-y)+1)-th* available RACH occasion;
- when the difference is not greater than *1*/*x* of the valid time, the terminal determines to use the *x-th* available RACH occasion.

The valid time of the uplink synchronization auxiliary information refers to the duration for which the uplink synchronization auxiliary information is valid, and the starting point of this duration is the epoch time of the uplink synchronization auxiliary information. Optionally, the valid time of the uplink synchronization auxiliary information is also configured in the SIB. Available RACH occasions include RACH occasions that are located after the epoch time of the uplink synchronization auxiliary information in the time domain. The *x-th* RACH occasion is before the *(x-1)-th* RACH occasion, where *x* is a preset value, and the value of *x* can be broadcast to the terminal by the network device; *y* is less than or equal to *x, y* and *x* are positive integers, and *x* is greater than or equal to 2.

The difference between the valid time and the time difference between the first timepoint and the second timepoint is usually not greater than the valid time. Optionally, when the difference between the valid time and the time difference between the first timepoint and the second timepoint is greater than the valid time, the terminal will use the first available RACH occasion.

Optionally, when the terminal is configured with a selected beam (i.e., beam forming), the terminal will use beam-based RACH occasions, and the terminal will consider the influence of beams when selecting an RACH occasion. Accordingly, the terminal will select the RACH occasion to send the PRACH according to the time difference from the RACH occasions corresponding to the selected beam. In other words, among the RACH occasions corresponding to the selected beam, the RACH occasion to send the PRACH is selected based on the above method. Accordingly, the terminal only initiates random access at an RACH occasion corresponding to the selected beam.

In a specific example, the network device configures the uplink synchronization auxiliary information to the terminal by broadcasting SIB19, where the broadcast period of SIB19 is 200ms. The epoch time of the uplink synchronization auxiliary information determined by the terminal is SFN#999 subframe#1, and the corresponding valid time of the uplink synchronization auxiliary information is 30s. The configuration index of PRACH (prach-ConfigurationIndex) = 2, and there is an RACH occasion every 4 SFNs, which can be expressed as SFN={1, 5, 9, 13...}.

Herein, UE#1 receives SIB19 in SFN#1 subframe#1, and UE#2 receives SIB19 in SFN#81 subframe#1. In related art, both UE#1 and UE#2 should initiate random access at the first RACH occasion after the epoch time, that is, the RACH occasion when SFN=1001. Based on the method according to some embodiments of this application, UE#1 receives SIB 19 before UE#2 and should initiate random access earlier. Accordingly, UE# 1 will initiate random access at SFN#1001, and UE#2 will initiate random access at SFN#1005. Thus, access conflicts between UE#1 and UE#2 are avoided.

In a specific example, the parameters are configured as follows. The synchronization signal block-per random access channel-occasion and code block-preambles per synchronization signal block (ssb-perRACH-OccasionAndCB-PreamblesPerSSB) is four: 13; the Msg 1-frequency division multiplexing (msg1-FDM) is 1; and the synchronization signal block-bitmap of positions in burst (ssb-PositionsInBurst mediumBitmap) is '11110000'.

For example, FIG. 6 is a schematic diagram of SSBs and RACH occasions according to some embodiments of this application. As shown in FIG. 6, according to the above parameter configuration, the cell transmits a total of 4 SSBs (ssb-PositionsInBurst mediumBitmap: '11110000'), 1 RACH occasion corresponds to 4 SSBs (ssb-perRACH-OccasionAndCB-PreamblesPerSSB four:13), with each SSB corresponding to 13 competition-based preambles (ssb-perRACH-OccasionAndCB-PreamblesPerSSB four:13). The base station can determine the SSB index through the range of detected Preamble index. The mapping relationship is {SSB0: 0-12, SSB1: 16-28, SSB2: 32-44, SSB3: 48-60}.

Since each RO (RACH occasion) includes all beams, accordingly, the ROs selected by UE#1 and UE#2 are not affected by the beams at this time. So the selection manner can be the same as in the previous example. For example, UE# 1 selects beam #1 corresponding to SSB#1, and UE#2 selects beam 2 corresponding to SSB#2.

In a specific example, the parameter configuration is: ssb-perRACH-OccasionAndCB-PreamblesPerSSB is 1:52; msg1-FDM is 2; and ssb-PositionsInBurst mediumBitmap is '11110000'.

For example, FIG. 7 is a schematic diagram of SSBs and RACH occasions according to some embodiments of this application. As shown in FIG. 7, by changing the configuration parameters in the previous example, it can be seen that in this example, one SSB corresponds to one RO, and each RO or SSB uses all 52 competition-based preambles. In this way, the base station cannot distinguish SSBs through the preamble index, but can only distinguish them through ROs with different time-frequency resources. The four SSBs are mapped to four ROs of different time-frequency resources, including RO0 to RO3.

In this example, UE#1 receives SIB19 in SFN#1 subframe#1, and UE#1's selected beam#1 corresponds to SSB#1; UE#2 receives SIB19 in SFN#81 subframe#1, and UE#2's selected beam# 2 corresponds to SSB#2.

In related art, both UE#1 and UE#2 should initiate random access at the first RACH occasion after the epoch time, that is, UE#1 initiates random access at the RACH occasion (corresponding to SSB#0 and SSB#1) when SFN=1001, and UE#2 initiates random access at the RACH occasion (corresponding to SSB#2 and SSB#3) when SFN=1005.

Based on the method according to some embodiments of this application, UE#1 receives SIB19 before UE#2 and should initiate random access earlier. Accordingly, UE#1 initiates random access at SFN#1001, and UE#2 initiates random access at SFN#1013 (the RACH occasion corresponding to the second available SSB#2). Thus, access conflicts between UE#1 and UE#2 when they have selected beams are avoided.

To sum up, based on the method according to some embodiments of this application, the terminal determines the transmission resources of the message used to initiate random access based on the time difference between a first timepoint and a second timepoint, where the first timepoint is determined based on the system information received by the terminal, and the second timepoint is determined based on the epoch time of the uplink synchronization auxiliary information received by the terminal. Accordingly, the terminals that search the same base station at different timepoints can be prevented from initiating random access at the same RACH occasion, thereby avoiding access conflicts of terminals and reducing the probability of access failure caused by access conflicts.

It should be noted that the sequence of the method steps according to some embodiments of this application can be adjusted appropriately, and the steps can also be added or deleted accordingly according to the situation. Those skilled in the art can easily conceives modified methods within the technical scope disclosed in this application, which should fall within the protection scope of this application and, therefore, will not be elaborated here.

FIG. 8 shows a structural block diagram of a random access apparatus according to some embodiments of this application. As shown in FIG. 8, the device includes:
a determining module 801, configured to determine, based on a time difference between a first timepoint and a second timepoint, a resource for sending a first message;
the first timepoint is determined based on SI received by the terminal, the second timepoint is determined based on an effective timepoint of uplink synchronization auxiliary information received by the terminal, and the first message is used for initiating random access.

In an optional implementation, the first timepoint includes at least one of the following:
a starting timepoint or an ending timepoint of a time slot at which the terminal receives an SIB;
a starting timepoint or an ending timepoint corresponding to a system frame number or a subframe number where the SIB received by the terminal is located;
a starting timepoint or an ending timepoint of a system information time window where the SIB received by the terminal is located;
where the SIB includes the uplink synchronization auxiliary information.

In an optional implementation, the effective timepoint of the uplink synchronization auxiliary information is indicated by the SIB; or, the effective timepoint of the uplink synchronization auxiliary information is determined based on the SIB received by the terminal.

In an optional implementation, the second timepoint is the effective timepoint of the uplink synchronization auxiliary information.

In an optional implementation, the determination module 801 is configured to:
determining, based on the time difference, a random access occasion for sending a PRACH.

In an optional implementation, the determination module 801 is configured to:
determine, based on the time difference and *n* preset time differences, the random access occasion for sending the PRACH:
when the time difference is not greater than an *m-th* preset time difference and greater than an *(m-1)-th* preset time difference, determine to use an *((n-m)+1)-th* available random access occasion; and
when the time difference is not greater than a *1^{st}* preset time difference, determine to use an *n-th* available random access occasion;
where the *(m-1)-th* preset time difference is less than the *m-th* preset time difference, *m* is less than or equal to *n,* and *m* and *n* are positive integers.

In an optional implementation, the determination module 801 is used to:
determine, based on a valid time of the uplink synchronization auxiliary information as well as a difference between the time difference and the valid time, the random access occasion for sending the PRACH:
when the difference is not greater than *y*/*x* of the valid time and greater than *(y-1)*/*x* of the valid time, determine to use an *((x-y)+1)-th* available random access occasion; and
when the difference is not greater than *1*/*x* of the valid time, determine to use an *x-th* available random access occasion;
where x is a preset value, *y* is less than or equal to *x,* and *y* and x are positive integers.

In an optional implementation, the determination module 801 is used to:
when the terminal has a selected beam, determine, based on the time difference, the random access occasion for sending the PRACH from random access occasions corresponding to the selected beam.

In an optional implementation, the SIB includes at least one of the following:
SIB 19;
NTN-SIB.

In an optional implementation, the uplink synchronization auxiliary information includes at least one of the following:
satellite ephemeris information;
common TA parameter information.

In an optional implementation, the first message includes at least one of the following:
Msg 1;
Msg A.

It should be noted that when the apparatus according to some embodiments implements its functions, the division of the above functional modules is only used as an example. In practical applications, the above functions can be allocated to different functional modules according to actual needs. That is, the content structure of the apparatus can be divided into different functional modules to complete all or part of the functions described above.

Regarding the apparatus in the above embodiments, the specific manner in which each module performs operations has been described in detail in the embodiments related to the method, and will not be described in detail here.

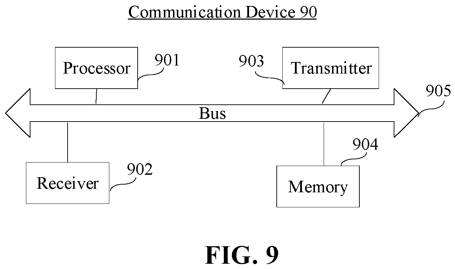

FIG. 9 shows a schematic structural diagram of a communication device according to some embodiments of this application. The communication device 90 includes: a processor 901, a receiver 902, a transmitter 903, a memory 904 and a bus 905.

The processor 901 includes one or more processing cores. The processor 901 executes various functional applications and information processing by running software programs and modules.

The receiver 902 and the transmitter 903 can be implemented as a communication component, and the communication component can be a communication chip.

The memory 904 is connected to the processor 901 through a bus 905.

The memory 904 can be configured to store at least one instruction, and the processor 901 is configured to execute the at least one instruction to implement each step in the above method embodiments.

Additionally, the memory 904 may be implemented by any type of volatile or non-volatile storage device, or combination thereof, including but not limited to: magnetic or optical disks, electrically erasable programmable read only memory (EEPROM), erasable programmable read only memory (EPROM), static random access memory (SRAM), read-only memory (ROM), magnetic memory, flash memory, and programmable read-only memory (PROM).

When the communication device is implemented as a terminal, the processor and transceiver in the communication device involved in the embodiments of this application can be implemented together as a communication chip, or the transceiver alone forms a communication chip. In some embodiments, the transmitter in the transceiver performs the sending steps performed by the terminal in any of the above methods, the receiver in the transceiver performs the receiving steps performed by the terminal in any of the above methods, and the processor performs steps other than the sending and receiving steps, which will not be repeated here.

In an exemplary embodiment, a computer-readable storage medium is further provided, in which at least one instruction, at least one program segment, a code set or an instruction set is stored, and the at least one instruction, the at least one program segment, the code set or the instruction set is loaded and executed by a processor to implement the random access method according to each of the above method embodiments.

In an exemplary embodiment, a chip is further provided. The chip includes programmable logic circuits and/or program instructions. When the chip is run on a communication device, it is configured to implement the random access method according to each of the above method embodiments.

In an exemplary embodiment, a computer program product is further provided, which, when run on a processor of a computer device, causes the computer device to perform the above random access method.

Those skilled in the art should realize that in one or more of the above examples, the functions described in the embodiments of this application can be implemented using hardware, software, firmware, or any combination thereof. When implemented using software, the functions may be stored on or transmitted over as one or more instructions or codes on a computer-readable medium. The computer-readable medium includes computer storage medium and communication medium including any medium that facilitates transfer of a computer program from one place to another. The storage medium can be any available medium that can be accessed by a general purpose or special purpose computer.

The above are only exemplary embodiments of this application and are not intended to limit this application. Any modifications, equivalent substitutions, improvements, and the like made within the spirit and principles of this application should fall within the protection of this application.

## Claims

1. A random access method, **characterized in** being performed by a terminal and comprising:
determining, based on a time difference between a first timepoint and a second timepoint, a resource for sending a first message,
wherein, the first timepoint is determined based on system information (SI) received by the terminal, the second timepoint is determined based on an effective timepoint of uplink synchronization auxiliary information received by the terminal, and the first message is used for initiating random access.

2. The method according to claim 1, wherein the first timepoint comprises at least one of:
a starting timepoint or an ending timepoint of a time slot at which the terminal receives a system information block (SIB);
a starting timepoint or an ending timepoint corresponding to a system frame number or a subframe number where the SIB received by the terminal is located;
a starting timepoint or an ending timepoint of a system information time window where the SIB received by the terminal is located;
wherein, the SIB comprises the uplink synchronization auxiliary information.

3. The method according to claim 2, wherein the effective timepoint of the uplink synchronization auxiliary information is indicated by the SIB; or, the effective timepoint of the uplink synchronization auxiliary information is determined based on the SIB received by the terminal.

4. The method according to claim 1, wherein the second timepoint is the effective timepoint of the uplink synchronization auxiliary information.

5. The method according to any one of claims 1 to 4, wherein determining, based on the time difference between the first timepoint and the second timepoint, the resource for sending the first message comprises:
determining, based on the time difference, a random access occasion for sending a physical random access channel (PRACH).

6. The method according to claim 5, wherein determining, based on the time difference, the random access occasion for sending the PRACH comprises:
determining, based on the time difference and *n* preset time differences, the random access occasion for sending the PRACH:
when the time difference is not greater than an *m-th* preset time difference and greater than an *(m-1)-th* preset time difference, determining to use an *((n-m)+1)-th* available random access occasion; and
when the time difference is not greater than a *1^{st}* preset time difference, determining to use an *n-th* available random access occasion;
wherein, the *(m-1)-th* preset time difference is less than the *m-th* preset time difference, *m* is less than or equal to *n,* and *m* and *n* are positive integers.

7. The method according to claim 5, wherein determining, based on the time difference, the random access occasion for sending the PRACH comprises:
determining, based on a valid time of the uplink synchronization auxiliary information as well as a difference between the time difference and the valid time, the random access occasion for sending the PRACH:
when the difference is not greater than *y*/*x* of the valid time and greater than *(y-1)*/*x* of the valid time, determining to use an *((x-y)+1)-th* available random access occasion; and
when the difference is not greater than *1*/*x* of the valid time, determining to use an *x-th* available random access occasion;
wherein, *x* is a preset value, *y* is less than or equal to *x,* and *y* and *x* are positive integers.

8. The method according to claim 5, wherein determining, based on the time difference between the first timepoint and the second timepoint, the random access occasion for sending the PRACH comprises:
when the terminal has a selected beam, determining, based on the time difference, the random access occasion for sending the PRACH from random access occasions corresponding to the selected beam.

9. The method according to claim 2 or 3, wherein the SIB comprises at least one of:
SIB 19;
non-terrestrial network communication (NTN)-SIB.

10. The method according to any one of claims 1 to 4, wherein the uplink synchronization auxiliary information comprises at least one of:
satellite ephemeris information;
public timing advance (TA) parameter information.

11. The method according to any one of claims 1 to 4, wherein the first message comprises at least one of:
Message (Msg) 1;
Msg A.

12. A random access apparatus, **characterized in** comprising:
a determining module, configured to determine, based on a time difference between a first timepoint and a second timepoint, a resource for sending a first message;
wherein, the first timepoint is determined based on system information (SI) received by the terminal, the second timepoint is determined based on an effective timepoint of uplink synchronization auxiliary information received by the terminal, and the first message is used to initiating random access.

13. A terminal, **characterized in** comprising:
a processor;
a transceiver connected to the processor; and
a memory configured to store executable instructions of the processor;
wherein, the processor is configured to load and execute the executable instructions to implement the random access method according to any one of claims 1 to 11.

14. A computer-readable storage medium, **characterized in** storing therein executable instructions, wherein the executable instructions are loaded and executed by a processor to implement the random access method according to any one of claims 1 to 11.

15. A chip, **characterized in** comprising a programmable logic circuit or program, wherein the chip is configured to implement the random access method according to any one of claims 1 to 11.
